## Europäisches Patentamt
## European Patent Office
## Office européen des brevets

(19)

(11) Veröffentlichungsnummer: **0 035 686**
**B1**

(12) # EUROPÄISCHE PATENTSCHRIFT

(45) Veröffentlichungstag der Patentschrift:
**16.01.85**

(51) Int. Cl.⁴: **C 08 F  255/02,** C 08 F  263/02

(21) Anmeldenummer: **81101290.5**

(22) Anmeldetag: **23.02.81**

(54) **Verfahren zur Herstellung von Ethylen-Vinylester-Pfropfpolymerisatdispersionen.**

(30) Priorität: **07.03.80  DE 3008748**

(43) Veröffentlichungstag der Anmeldung:
**16.09.81 Patentblatt 81/37**

(45) Bekanntmachung des Hinweises auf die Patenterteilung:
**16.01.85 Patentblatt 85/3**

(84) Benannte Vertragsstaaten:
**DE FR GB IT**

(56) Entgegenhaltungen:
**DE - A - 1 237 311**
**DE - A - 2 710 771**
**FR - A - 2 102 877**

**CHEMICAL ABSTRACTS, Band 81, Nr. 16, 21. Oktober 1974, Seite 35, Nr. 92416p Columbus, Ohio, U.S.A.**
**CHEMICAL ABSTRACTS, Band 77, Nr. 26, 25. Dezember 1972, Seite 16, Nr. 165298f Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Riebel, Klaus, Dr., An der Schanz 2, D-5000 Köln 60 (DE)**
Erfinder: **Alberts, Heinrich, Dr., Morgengraben 16, D-5000 Köln 80 (DE)**
Erfinder: **Bartl, Herbert, Dr., Eichendorffweg 10, D-5068 Odenthal (DE)**
Erfinder: **Mietzsch, Fritz, Dr., Isidor-Caro-Strasse 58, D-5000 Köln 80 (DE)**
Erfinder: **Steffen, Ulrich, Dr., Im Daubenthal 8, D-4047 Dormagen (DE)**

## Beschreibung

Die vorliegende Erfindung betrifft ein Verfahren zur Herstellung von Ethylen-Vinylester-Pfropfcopolymerisaten, durch das die in Lösung hergestellten Pfropfpolymerisate direkt in stabile Dispersionen überführt werden.

Es ist bekannt, Ethylen-Copolymere aus ihrer Lösung in feinteilige Dispersionen zu überführen. So wird in der DE-B-1 237 311 ein Verfahren beschrieben, Ethylen-Vinylester-Copolymere aus ihrer Lösung in tert. Butanol oder Gemischen aus tert. Butanol, gegebenenfalls Vinylestern und einem organischen mit Wasser nicht mischbaren Lösungsmittel mit einem Siedepunkt oberhalb 50 °C, unter Verwendung einer Kombination anionischer Emulgatoren und nichtionischer Dispergierhilfsmittel in Wasser zu dispergieren und aus dieser Emulsion das Lösungsmittel durch Destillation zu entfernen. Diese Verfahren führt zwar zu feinteiligen Ethylen-Vinylester-Copolymerdispersionen, bedarf aber des Zusatzes spezieller Emulgier- und Dispergierhilfsmittel, welche häufig unerwünscht sind und oft zur Schaumbildung bei der destillativen Entfernung des Lösungsmittels führen. Weiterhin sind aus C.A. 77 (1972) 165 298f und FR-A-2 102 877 die Herstellung feinteiliger, stabiler Dispersionen durch Polymerisierung von Vinylmonomeren in einer Lösung von EVA-Copolymeren bekannt.

Es wurde nun gefunden, dass ohne Verwendung solcher Emulgatoren und Dispergatoren und ohne Zusatz von mit Wasser nicht mischbaren Lösungsmitteln feinteilige, stabile Dispersionen von Ethylen-Vinylester-Pfropfpolymerisaten erhalten werden, wenn man bei der Herstellung der Pfropfpolymerisate in organischer Lösung, nachdem mindestens 25 Gew.-% der Pfropfmonomeren umgesetzt sind, unter Einwirkung von Scherkräften, z.B. Rühren, ein Fällungsmittel für die Reaktionsprodukte zugibt. Im allgemeinen gibt man das Fällungsmittel bei noch unvollständigem Umsatz der Pfropfmonomeren zu und führt die Polymerisation während oder nach der Bildung der Dispersion zu Ende. Selbstverständlich ist es aber auch möglich, zunächst die Pfropfpolymerisation bis zum gewünschten, z.B. vollständigen Monomerumsatz, durchzuführen und dann die Reaktionsprodukte in eine Dispersion zu überführen.

Gegenstand der Erfindung ist ein Verfahren zur Herstellung stabiler, feinteiliger Dispersionen von gegebenenfalls vernetzten Ethylen-Vinylester-Pfropfpolymerisaten, dadurch gekennzeichnet, dass man

A) 95–25, vorzugsweise 90–50 Gew.-% eines Ethylen-Vinylester-Copolymerisats mit einem Vinylestergehalt von 25–75, vorzugsweise von 35–50 Gew.-% als Pfropfsubstrat und

B) 5–75, vorzugsweise 10–50 Gew.-% eines Vinylesters einer $C_1$–$C_{18}$-Carbonsäure und/oder eines $C_1$–$C_{10}$-Alkylesters der Acryl- und/oder Methacrylsäure sowie

C) 0–40, vorzugsweise 0–20 Gew.-% eines zwei oder mehr C–C-Doppelbindungen enthaltenden Vernetzungsmittels, wobei die Summe der Komponenten A)–C) stets 100 Gew.-% beträgt, in organischer Lösung bis zu einem Umsatz von mindestens 25 Gew.-% der Komponente B) polymerisiert und dann unter Einwirkung von Scherkräften ein Fällungsmittel zugibt, wobei das Reaktionsprodukt ausfällt und gleichzeitig in eine stabile Dispersion übergeht, und die Polymerisation vor, während oder nach der Bildung der Dispersion zu Ende führt.

Als Pfropfsubstrate werden Ethylen-Vinylester-Copolymere mit 25 bis 75, vorzugsweise mit 35 bis 50 Gew.-% einpolymerisierten Vinylester eingesetzt. Als Vinylester kommen organische Vinylester von gesättigten, gegebenenfalls durch Halogen, insbesondere durch Chlor, substituierten $C_1$–$C_{18}$-Monocarbonsäuren in Frage, wie Vinylformiat, Vinylacetat, Vinylpropionat, Vinylchlorpropionat, Vinylbutyrat, Vinylisobutyrat, Vinyllaurinat, Vinylmyristinat, Vinylstearat, Vinylbenzoat. Bevorzugt sind Ethylen-Vinylacetat-Copolymerisate.

Die Ethylen-Vinylester-Copolymeren werden nach den bekannten Verfahren der Hoch- und Mitteldrucksynthese, gegebenenfalls in Lösungsmitteln wie tert.-Butanol, hergestellt, und können, falls gewünscht, ganz oder teilweise verseift sein. Sie haben i.a. Mooneyviskositäten ML4/100 °C, gemessen nach DIN 53 523, von 15 bis 80, bevorzugt 20 bis 45 und Grenzviskositäten $\eta$ von 0,5 bis 1,8 dl/g, gemessen in THF.

Für die Pfropfreaktionen geeignete Monomere sind die bereits genannten Vinylester von $C_1$–$C_{18}$-Carbonsäuren und/oder $C_1$–$C_{10}$-Alkylester der Acryl- und/oder Methacrylsäure wie Methyl-(meth)acrylat, n- oder Isobutyl(meth)acrylat, Ethyl(meth)acrylat, n- oder Isopropyl(meth)acrylat und 2-Ethylhexyl(meth)acrylat. Bevorzugt wird Vinylacetat als Pfropfmonomeres verwendet.

Die Pfropfreaktion kann gegebenenfalls durch Zugabe von 0 bis 10, vorzugsweise 0,1 bis 10 Gew.-%, bezogen auf Komponente B, an sog. «Pfropfaktivatoren» begünstigt werden. Als Pfropfaktivatoren eignen sich leicht copolymerisierbare ungesättigte Monomere, beispielsweise $C_2$–$C_{18}$-$\alpha$-Olefine wie Ethylen, Propylen und Isobutylen, Allylverbindungen wie Diisobutylen, Isobutylendiacetat, Isobutylendiol, Vinylethylencarbonat, Diallylcarbonat, 1-Buten-3,4-diol sowie 2-Methylen-1,3-dihydroxipropan oder 2-Methylen-1,3-diacetoxipropan, (Meth)Acrylsäure und (Meth)Acrylamid. Bevorzugt ist Ethylen als Pfropfaktivator.

Für die Herstellung vernetzter Pfropfpolymerisate geeignete Vernetzungsmittel sind z.B. Divinylaromaten, Divinylether, Divinylester von $C_2$–$C_{10}$-Dicarbonsäuren, Diallyl- und Triallylether und -ester, Ester von Diolen mit $\alpha,\beta$-ungesättigten $C_3$–$C_{10}$-Monocarbonsäuren sowie ungesättigte Polyester. Beispielhaft seien genannt: Divinylbenzol, Butandiol-diacrylat, Glykoldivinylether, Divinyladipat, Allylvinylether, Diallylfumarat, Triallylcyanurat und Trimethylolpropan-triallylether.

Die als Vernetzungsmittel eingesetzten aliphatischen oder gemischt aliphatisch-aromatischen Polyester werden in an und für sich bekannter Weise durch Veresterung oder Umesterung von Gemischen aus aliphatischen oder aromatischen Dicarbonsäuren oder ihren Derivaten wie Anhydriden oder Estern und aliphatischen Dialkoholen hergestellt (vgl. Ullmanns Enzyklopädie der technischen Chemie, 14. Band; Urban u. Schwarzenberg, München, 1963, S. 80 ff).

Beispiele für bevorzugt zur Herstellung der Polyester zu verwendende ungesättigte Dicarbonsäuren oder ihre Derivate sind Maleinsäure, Maleinsäureanhydrid und Fumarsäure. Verwendet werden können jedoch auch Mesaconsäure, Citraconsäure, Itaconsäure oder Chlormaleinsäure. Daneben können auch aromatische Dicarbonsäuren oder ihre Derivate wie Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid sowie gesättigte Dicarbonsäuren und deren Derivate wie Bernsteinsäure bzw. Bernsteinsäureanhydrid und Bernsteinsäureester und -chlorid, Adipinsäure und Sebacinsäure verwendet werden. Bevorzugt sind Polyester von Maleinsäure, die bis zu 25 Mol-% durch Phthalsäure oder Isophthalsäure ersetzt sein kann sowie von Adipinsäure, die bis zu 30 Mol-% durch Maleinsäure ersetzt sein kann.

Als zweiwertige Alkohole zur Herstellung der Polyester können z.B. Ethylenglykol, Propandiol-1,2, Propandiol-1,3, Diethylenglykol, Dipropylenglykol, Butandiol-1,3, Butandiol-1,4, Neopentylglykol, Hexandiol-1,6 und Perhydrobisphenol eingesetzt werden. Bevorzugt verwendet werden Ethylenglykol, Propandiol-1,2, Diethylenglykol und Dipropylenglykol.

Für verzweigtkettige Polyester werden höherfunktionelle Carbonsäuren oder Alkohole eingesetzt, erwähnt seien Glycerin, 1,1,1-Trimethylolpropan, Hexantriol und Pentaerithrit (vgl. z.B. DE-PS 1 105 106 und DE-AS 1 029 147). Die Molekulargewichte der Polyester liegen zwischen 800 bis 10 000, die OH-Zahlen zwischen 0,1 und 100, die Säurezahlen zwischen 0,1 und 80. Die Restwassergehalte der Polyester liegen im allgemeinen unter 0,1%. Falls gewünscht, können auch spezielle Polyester mit z.B. enger Molekulargewichtsverteilung eingesetzt werden, die durch Polymerisation von Lactonen, wie z.B. β-Propiolacton, γ-Butyrolacton oder ε-Caprolacton erhalten werden, oder durch Copolymerisation von Epoxiden mit cyclischen Anhydriden (vgl. K. Hamann, Makrom. Chem. 51 (1962) 53 und R.F. Fischer, J. Poly. Sci. 44 (1960) 155).

Die Polyester können alleine, in Mischung mit anderen Polyestern oder gegebenenfalls auch Polyethern eingesetzt werden.

Die ungesättigten Polyester haben gegenüber den niedermolekularen Vernetzern den Vorteil, dass sie mit dem Ethylen-Vinylester-Copolymeren ausgefällt werden und somit im dispergierten Partikel zu einer hohen Vernetzungsdichte führen.

Geeignete Lösungsmittel für das erfindungsgemässe Verfahren sind u.a. cycloaliphatische und aromatische, gegebenenfalls halogenierte Kohlenwasserstoffe und geradkettige und verzweigte $C_4$–$C_8$-Monoalkohole. Bevorzugte Lösungmittel im Sinne der Erfindung sind mit Wasser mischbare Lösungsmittel wie z.B. Dimethylformamid oder Tetrahydrofuran, bevorzugt tert.-Butanol sowie Gemische von tert.-Butanol mit bis zu 25% seines Gewichtes an Wasser. Als Fällungsmittel werden im allgemeinen Wasser oder $C_1$–$C_3$-Alkohole verwendet. Das bevorzugte Fällungsmittel im Sinne der Erfindung ist Wasser.

Die Pfropfcopolymerisation nach dem erfindungsgemässen Verfahren kann im allgemeinen ohne Verwendung von Dispergatoren durchgeführt werden, da die Ethylen-Vinylester-Copolymeren sowie die Pfropfpolymerisate selbst als Dispergatoren wirken. In bestimmten Fällen können aber gegebenenfalls solche Hilfsmittel zugesetzt werden.

Besonders wirksame Dispergatoren sind in Vinylaromaten, in ungesättigten Polyestern oder in einem Polyester/Vinylaromat-Gemisch lösliche hochmolekulare Polymere. Ganz besonders bevorzugte Dispergatoren sind Ethylen-Vinylacetat-Copolymerisate mit mehr als 60 Gew.-%, vorzugsweise 65–75 Gew.-% Vinylacetatgehalt und einer Mooney-Viskosität von mindestens 15, vorzugsweise von 40 bis 65 Mooney, gemessen nach DIN 53 523 (1–4) und Polyvinylacetat.

Weiterhin sind als Dispergatoren aber auch Polymerisate von (Meth)Acrylsäureestern, die 1 bis 24 C-Atome in der Alkoholkomponente enthalten, oder deren Copolymerisate mit Vinylestern organischer Mono- oder Dicarbonsäuren mit 1 bis 18 C-Atomen sowie deren Verseifungsprodukten geeignet. Sehr gute Dispergatoren sind auch Pfropfpolymerisate mit den genannten Polymeren als Pfropfsubstrat. Geeignete Dispergatoren sind ferner Cellulosederivate wie Methylcellulose, Hydroxiethylcellulose oder Celluloseester, z.B. Celluloseacetat, Celluloseacetopropionat, Celluloseacetobutyrat oder Nitrocellulose.

Genannt seien auch noch beispielhaft Styrol-Acrylsäure- oder verseifte Styrol-Malein-säureanhydrid-Copolymerisate, Polyethylenoxide, Polyacrylamid oder Polyacrylsäure. Die Dispergierhilfsmittel werden in Mengen von 0–10 Gew.-%, vorzugsweise von 0,5 bis 2 Gew.-%, bezogen auf den Gesamtfeststoffgehalt der Dispersion, zugesetzt.

Nach Zugabe der Pfropfmonomeren sowie gegebenenfalls der Vernetzungsmittel und Pfropfaktivatoren wird die Polymerisation durch Bestrahlung oder radikalliefernde Initiatoren ausgelöst. Initiatorradikale können ferner mit bekannten Redoxsystemen, mit Hilfe von UV-Bestrahlung oder aktinischem Licht oder beschleunigten Elektronen erzeugt werden.

Als Polymerisationskatalysatoren können Peroder Azoverbindungen oder Radikale liefernde hochsubstituierte Ethanderivate wie z.B. Benzpinakol verwendet werden. Beispielhaft seien genannt: Benzoylperoxid. tert. Butylperpivalat, Lauroylperoxid, tert. Butylperoctoat, tert. Butylperbenzoat, di-tert. Butylperoxid, tert. Butylperisononanat, Diisopropylpercarbonat, Dicumylperoxid, tert.-Butylperneodecanoat, Azobisisobuttersäurenitril oder Ester der Azobisisobuttersäure wie z.B. der Bisethylester.

Die Polymerisationskatalysatoren können vor, während oder nach dem Lösen bzw. Mischen dem Polymerisationsansatz zugefügt werden. Vorzugsweise werden die Katalysatoren nach Herstellung der homogenen Pfropfsubstratlösung mit den Monomeren oder getrennt von den Monomeren in die Reaktionsmischung eingetragen.

Die Polymerisationskatalysatoren werden zweckmässigerweise in einer Menge von 0,001 bis 2 Gew.-%, bezogen auf die Summe von Pfropfsubstrat und Pfropfmonomere eingesetzt. Diese Menge können selbstverständlich weit überschritten bzw. unterschritten werden.

Die Pfropfpolymerisation wird je nach verwendeten Initiatoren bei Temperaturen zwischen 20 und 250 °C, bevorzugt im Temperaturintervall von 50 bis 150 °C durchgeführt. Es werden Drücke von 1 bis 400 bar, vorzugsweise von 1 bis 25 bar angewendet.

Die erfindungsgemässe Pfropfpolymerisation und Dispergierung kann sowohl kontinuierlich als auch diskontinuierlich durchgeführt werden. Das Pfropfsubstrat wird in einem Lösungsmittel, bzw. Lösungs-Fällungsmittelgemisch gelöst. Nach Zugabe des oder der Pfropfmonomeren, gegebenenfalls einer oder mehrerer Vernetzerkomponenten, evtl. Pfropfaktivatoren sowie in speziellen Fällen Dispergierhilfsmitteln, wird die Polymerisation gestartet. Nachem mindestens 25 Gew.-% der Pfropfmonomeren umgesetzt sind, dosiert man ein Fällungsmittel zu und fällt die Reaktionsprodukte aus.

Für die Durchführung des Verfahrens ist es von Vorteil, die Zugabe des Fällungsmittels in einer Zone hoher Turbulenz vorzunehmen. Zur Herstellung der Dispersion in einer Zone hoher Turbulenz bedient man sich im allgemeinen bekannter Vorrichtungen, z.B. konventioneller Rührkessel. Die spezifische Mischleistung in einem intensiv gerührten Rührkessel beträgt in der Regel $10^{-1}$ bis $10^{-3}$ Watt/cm³.

Wesentlich besser geeignet als konventionelle Rührkessel sind mit Rotoren versehene Pumpen, vor allem deshalb, weil bei ihnen die Verweilzeit in der Zone hoher Turbulenz scharf begrenzt ist. Eine spezifisch auf hohe Turbulenz entwickelte Spezialausführung sogenannter Kreiselhomogenisiermaschinen eignet sich für besonders hohen Durchsatz; ihre spezifische Mischleistung beträgt etwa 5–25 Watt/cm³. Sie gestatten also eine besonders intensive Durchmischung bei sehr kurzer Verweilzeit und werden daher bevorzugt verwendet.

Die nach dem erfindungsgemässen Verfahren ausgefällten Reaktionsprodukte liegen in Form stäbiler, feinteiliger Dispersionen von homogener Teilchengrössenverteilung vor. Die Partikelgrösse variiert zwischen 0,1 und 10 µm, bevorzugt ist der Bereich zwischen 0,2 und 2 µm. Die Lagerstabilität beträgt mindestens sechs Monate.

Die nach dem erfindungsgemässen Verfahren hergestellten Ethylen Vinylester-Pfropfpolymerdispersionen eignen sich zum Beschichten von Papier und Geweben aller Art, als Bindemittel für Faservliese natürlicher oder synthetischer Herkunft sowie als Bindemittel für Anstrichfarben.

Die folgenden Beispiele erläutern die Erfindung. Es wird ein Ethylen-Vinylacetat-Copolymeres (EVA-Copolymeres) mit einem Vinylacetatgehalt von 45%, einer Mooneyviskosität von 18–25 und einer Grenzviskosität η von 1,2 [dl/g], gemessen in Toluol, eingesetzt. Prozentangaben beziehen sich stets auf das Gewicht. Als Vernetzungsmittel dient ein als Polyester A bezeichneter, aus 0,5 Mol Butandiol, 0,5 Mol Ethylenglykol, 0,7 Mol Adipinsäure und 0,3 Mol Maleinsäure synthetisierter Polyester, der eine OH-Zahl von 53, eine Säurezahl von 0,8 sowie eine Viskosität bei 75 °C von 1890 mPas besitzt. Die in den Beispielen beschriebenen Versuche werden in mit einem Anker-Impellrührer ausgerüsteten 12 bzw. 20 l Autoklav durchgeführt; die Rührergeschwindigkeit beträgt 240 bzw. 180 U/min.

Beispiel 1

2000 g EVA-Copolymeres werden in einem Rührkessel in 6000 g tert.-Butanol und 1000 g Wasser gelöst. Dazu werden 500 g Vinylacetat dosiert. Nach Zugabe von 5 g tert.-Butyl-perpivalat, gelöst in 100 g eines 4 : 1 Gemisches von tert.-Butanol und Wasser, wird 30 min anpolymerisiert und dann bei einer Temperatur von 80 °C über einen Zeitraum von 1 h gleichzeitig 45 g Perpivalat, gelöst in 300 g eines 4 : 1 Gemisches von tert.-Butanol und Wasser und 1500 g Wasser in den Rührkessel gepumpt. Anschliessend werden nochmals 1000 g Wasser zudosiert und bis zum völligen Verbrauch des Initiators auspolymerisiert. Man erhält eine stabile, feinteilige Dispersion mit einem Feststoffgehalt von ca. 20%.

Beispiel 2

2000 g EVA-Copolymeres werden in einem Rührkessel in 6000 g tert. Butanol und 1000 g Wasser gelöst. Dazu werden 1000 g Vinylacetat dosiert. Nach Zugabe von 2 g tert.-Butyl-perpivalat wird die Reaktionslösung 1 h bei einer Temperatur von 80 °C gerührt und danach innerhalb von 1 h 1500 g Wasser zugepumpt. Anschliessend werden nochmals 1000 g Wasser zudosiert und bis zum völligen Verbrauch des Initiators auspolymerisiert. Man erhält eine stabile, feinteilige Dispersion mit einem Feststoffgehalt von ca. 24%.

Beispiel 3

2000 g EVA-Copolymeres und 100 g Polyester A werden in einem Rührkessel in 6000 g tert.-Butanol gelöst. Dazu werden 500 g Vinylacetat dosiert. Nach Zugabe von 5 g tert.-Butyl-perpivalat, gelöst in 100 g eines 4 : 1 Gemisches von tert.-Butanol und Wasser, wird die Reaktionslösung bei einer Temperatur von 80 °C 30 Minuten lang gerührt. Danach werden über einen Zeitraum von 1 h gleichzeitig 45 g tert.-Butyl-perpivalat, gelöst in 500 g eines 4 : 1 Gemisches von tert. Butanol und Wasser und 2500 g Wasser in den Rührkessel gepumpt. Anschliessend werden nochmals 1000 g Wasser zudosiert und bis zum völligen Verbrauch des Initiators auspolymerisiert. Man erhält eine stabile, feinteilige Dispersion mit einem Feststoffgehalt von ca. 20%.

Beispiel 4

2000 g EVA-Copolymeres werden in einem Rührkessel in 6000 g tert. Butanol gelöst. Dazu werden 800 g Vinylacetat und 200 g n-Butylacrylat dosiert. Nach Zugabe von 2 g tert.-Butyl-perpivalat wird die Reaktionslösung bei einer Temperatur von 80 °C 3 h lang bis zum völligen Verbrauch des Initiators gerührt. Anschliessend wird die Reaktionslösung durch Zugabe von 4000 g Wasser unter Rühren in eine stabile, feinteilige Dispersion mit einem Feststoffgehalt von ca. 25% überführt.

Beispiel 5

2000 g EVA-Copolymeres werden in einem Rührkessel in 2000 g tert.-Butanol gelöst. Dazu werden 500 g Vinylacetat und 1 g Ethylen dosiert. Nach Zugabe von 5 g Dicumylperoxid wird 30 min anpolymerisiert und dann bei einer Temperatur von 150 °C gleichzeitig 15 g Dicumylperoxid, dispergiert in 150 g eines 4 : 1 Gemisches von tert.-Butanol und Wasser, und 1500 g Wasser innerhalb von 2 h in den Rührkessel gedrückt und bis zum völligen Verbrauch des Initiators auspolymerisiert. Man erhält eine stabile, feinteilige Dispersion mit einem Feststoffgehalt von ca. 40%.

**Patentansprüche**

1. Verfahren zur Herstellung stabiler, feinteiliger Dispersionen von gegebenenfalls vernetzten Ethylen-Vinylester-Pfropfpolymerisaten, dadurch gekennzeichnet, dass man
A) 95–25 Gew.-% eines Ethylen-Vinylester-Copolymerisats mit einem Vinylestergehalt von 25–75 Gew.-% als Pfropfsubstrat und
B) 5–75 Gew.-% eines Vinylesters einer $C_1$–$C_{18}$-Carbonsäure und/oder eines $C_1$–$C_{10}$-Alkylesters der Acryl- und/oder Methacrylsäure sowie
C) 0–40 Gew.-% eines zwei oder mehr C–C-Doppelbindungen enthaltenden Vernetzungsmittels, wobei die Summe der Komponenten A)–C) stets 100 Gew.-% beträgt, in organischer Lösung bis zu einem Umsatz von mindestens 25 Gew.-% der Komponente B) polymerisiert und dann unter Einwirkung von Scherkräften ein Fällungsmittel zugibt, wobei das Reaktionsprodukt ausfällt und gleichzeitig in eine stabile, feinteilige Dispersion übergeht, und die Polymerisation vor, während oder nach der Bildung der Dispersion zu Ende führt.

2. Verfahren nach Anspruch 1, dadurch gekennzeichnet, dass als Lösungsmittel tert.-Butanol oder dessen Gemisch mit bis zu 25% seines Gewichtes an Wasser und als Fällungsmittel Wasser eingesetzt wird.

3. Verfahren nach Anspruch 1, dadurch gekennzeichnet, dass spezifische Mischleistungen von $10^{-3}$ bis 25 Watt/cm³ angewendet werden.

4. Verfahren nach Anspruch 1–3, dadurch gekennzeichnet, dass
90–50 Gew.-% der Komponente A,
10–50 Gew.-% der Komponente B und

0–20 Gew.-% der Komponente C eingesetzt werden,
wobei die Summe von A)–C) stets 100 Gew.-% beträgt.

5. Verfahren nach Anspruch 1–3, dadurch gekennzeichnet, dass der Vinylestergehalt der Komponente A 35–50 Gew.-% beträgt.

6. Verfahren nach Anspruch 1–3, dadurch gekennzeichnet, dass als Komponente A ein Ethylen-Vinylacetat-Copolymerisat und als Komponente B Vinylacetat und/oder ein $C_1$–$C_{10}$-Alkyl-ester der Acryl- und/oder Methacrylsäure eingesetzt werden.

7. Verfahren nach Anspruch 1–3, dadurch gekennzeichnet, dass als Vernetzungsmittel ein ungesättigter Polyester eingesetzt wird.

8. Verfahren nach Anspruch 1–3, dadurch ge-kennzeichnet, dass ein $C_2$–$C_{18}$-α-Olefin als Pfropf-aktivator eingesetzt wird.

**Claims**

1. A process for the preparation of stable, finely divided dispersions of ethylene-vinyl ester graft polymers which are optionally cross-linked, characterised in that
A) 95–25% by weight of an ethylene/vinyl ester copolymer having a vinyl ester content of 25–75% by weight, as graft substrate, and
B) 5–75% by weight of a vinyl ester of a $C_1$–$C_{18}$-carboxylic acid and/or a $C_1$–$C_{10}$-alkyl ester of acrylic and/or methacrylic acid and
C) 0–40% by weight of a cross-linking agent containing two or more C–C double bonds, the sum of components A)–C) always being 100% by weight, are polymerised in organic solution until at least 25% by weight of component B) has been reacted, and a precipitating agent is then added under the action of shearing forces so that the reaction product precipitates and at the same time is converted into a stable, finely divided dispersion, and polymerisation is completed before, during or after the formation of the dispersion.

2. A process according to claim 1, characterised in that the solvent used is tert.-butanol or mixtures thereof with up to 25% of its weight of water and the precipitating agent used is water.

3. A process according to claim 1, characterised in that specific mixing powers of from $10^{-3}$ to 25 Watt/cm³ are employed.

4. A process according to claim 1–3, characterised in that
90–50% by weight of component A,
10–50% by weight of component B and
0–20% by weight of component C are used,
the sum of components A)–C) always being 100% by weight.

5. A process according to claim 1–3, characterised in that the vinyl ester content of component A is 35–50% by weight.

6. A process according to claim 1–3, characterised in that an ethylene/vinyl acetate copolymer is used as component A and vinyl acetate and/or a $C_1$–$C_{10}$-alkyl ester of acrylic acid and/or of methacrylic acid are used as component B.

7. A process according to claim 1–3, characterised in that the cross-linking agent used is an unsaturated polyester.

8. A process according to claim 1–3, characterised in that a $C_2$–$C_{18}$-α-olefine is used as a grafting activator.

**Revendications**

1. Procédé de production de dispersions stables de fines particules de polymères greffés éthylène-ester vinylique éventuellement réticulés, caractérisé en ce qu'on polymérise

A) 95 à 25% en poids d'un copolymère éthylène-ester de vinyle ayant une teneur en ester de vinyle de 25 à 75% en poids comme substrat de greffage et

B) 5 à 75% en poids d'un ester vinylique d'un acide carboxylique en $C_1$ à $C_{18}$ et/ou d'un ester alkylique en $C_1$ à $C_{10}$ de l'acide acrylique et/ou de l'acide méthacrylique ainsi que

C) 0 à 40% en poids d'un agent de réticulation présentant deux ou plus de deux doubles liaisons carbone-à-carbone, la somme des composants A)–C) s'élevant toujours à 100% en poids, en solution organique jusqu'à un degré de réaction d'au moins 25% en poids du composant B), puis on ajoute un précipitant sous l'action de forces de cisaillement, en sorte que le produit de réaction précipite tout en formant une dispersion stable de fines particules, et la polymérisation est achevée avant, pendant ou après la formation de la dispersion.

2. Procédé suivant la revendication 1, caractérisé en ce qu'on utilise le tertio-butanol ou ses mélanges avec jusqu'à 25% de son poids d'eau comme solvant et l'eau comme agent précipitant.

3. Procédé suivant la revendication 1, caractérisé en ce qu'on utilise des puissances spécifiques de mélange de $10^{-3}$ à 25 watts/cm³.

4. Procédé suivant les revendications 1–3, caractérisé en ce qu'on utilise
90–50% en poids du composant A,
10–50% en poids du compsant B et
0–20% du composant C,
la somme de A) à C) s'élevant toujours à 100% en poids.

5. Procédé suivant les revendications 1–3, caractérisé en ce que la teneur en ester de vinyle du composant A s'élève à 35–50% en poids.

6. Procédé suivant les revendications 1–3, caractérisé en ce qu'on utilise comme composant A un copolymère éthylène-acétate de vinyle et comme composant B l'acétate de vinyle et/ou un ester d'alkyle en $C_1$ à $C_{10}$ de l'acide acrylique et/ou de l'acide méthacrylique.

7. Procédé suivant les revendications 1–3, caractérisé en ce qu'on utilise un polyester insaturé comme agent de réticulation.

8. Procédé suivant les revendications 1–3, caractérisé en ce qu'on utilise comme activateur de greffage une α-oléfine en $C_2$ à $C_{18}$.